# EUROPEAN PATENT APPLICATION

(11) **EP 4 478 599 A1**
(43) Date of publication of application: **18.12.2024**
(21) Application number: 23216742.9
(22) Date of filing: 14.12.2023
(51) Int. Cl.: H02M 7/5387, H02P 27/08

(54) **METHOD FOR OVERMODULATING A MULTI-PHASE INVERTER, COMPUTER PROGRAM PRODUCT AND A MULTI-PHASE INVERTER**

(30) Priority: 15.06.2023 DE 102023115622
(71) Applicant: CARIAD SE, 38440 Wolfsburg (DE)
(72) Inventor: Hammam, Mohamed, 85051 Ingolstadt (DE)
(74) Representative: Bals & Vogel Patentanwälte PartGmbB

(57) **Abstract**

The invention relates to a method (100) for overmodulating a multi-phase inverter that is configured to convert a DC input voltage to an AC output voltage, comprising:
- determining (110) at least one hardware limitation of the multi-phase inverter,
- calculating (120) a hold angle (210), for which a duty cycle (230) of the inverter is kept at a constant level,
- calculating (130) a clamp angle (220), for which the AC output voltage is clamped to one half of the DC input voltage,
wherein calculating (120, 130) the hold angle (210) and/or the clamp angle (220) is specific for the at least one hardware limitation of the inverter. The invention further relates to a computer program product and a multi-phase inverter.

## Description

The invention relates to a method for overmodulating a multi-phase inverter, a computer program product, and a multi-phase inverter.

Pulse Width Modulation (PWM) may be used for the convert alternating current (AC) waveforms from DC power. Inverters that make use of PWM can drive 3 phase AC powered motors at varying speeds from DC, in particular using multiple class-D amplifiers.

There are variations of SVM that may result in different quality and computational requirements.

For example, EP 1 525 655 B1 discloses a drive system for a three-phase brushless AC motor that is arranged to optimize the transistor switching pattern to improve power output whilst allowing current measurement in all of the phases using a single sensor.

DE 10 2007 012 350 A1 relates to PWM methods and an apparatus that are provided for loss-minimized control of AC motors. The method includes providing a voltage to the AC motor based on a switching cycle, adding a duty cycle of a zero vector to each phase leg of the switching cycle when a duty cycle of a first phase leg of the switching cycle is less than a minimum duty cycle, and subtracting the duty cycle of the zero vector from each phase leg of the switching cycle when a second duty cycle of a second phase leg is greater than a maximum duty cycle.

However, none of the above-mentioned strategies enables an optimal control of the output voltage with regard to the attainable output voltage level and accuracy.

It is a task of the present invention to at least partially overcome the aforementioned disadvantages known from the prior art. In particular, it is a task of the present invention to provide a method for overmodulating a multi-phase inverter, a computer program product as well as a multi-phase inverter, which allow to obtain an accurate output voltage, in particular at high modulation index values.

The foregoing task is solved by a method for overmodulating a multi-phase inverter having the features of claim 1, a computer program product having the features of claim 8, and a multi-phase inverter having the features of claim 9. Further features and details of the invention result from the respective dependent claims, the description and the drawings. Features and details described in connection with the method according to the invention naturally also apply in connection with the computer program product according to the invention and/or the multi-phase inverter according to the invention, and vice versa in each case, so that reference is or can always be made mutually with regard to the disclosure concerning the individual aspects of the invention.

According to a first aspect of the invention, a method for overmodulating a multi-phase inverter that is configured to convert a DC input voltage to an AC output voltage is provided, comprising:
- determining at least one hardware limitation of the multi-phase inverter, in particular by a calculation unit,
- calculating a hold angle, for which a duty cycle of the inverter is kept at a constant level, in particular by the calculation unit,
- calculating a clamp angle, for which the AC output voltage is clamped to one half of the DC input voltage, in particular by the calculation unit,
wherein calculating the hold angle and/or the clamp angle is specific for the at least one hardware limitation of the inverter.

In other words, a process for determining an optimized overmodulation scheme for an inverter can be provided, which comprises obtaining at least one hardware constraint of the inverter as well as determining a hold and a clamp angle, wherein the hold angle is an angle or angle range in which the duty cycle of the inverter is kept at a constant level, wherein the clamp angle is an angle or angle range in which the voltage is clamped at a maximum level, and wherein the determination of the angles is based on an algorithm which uses the hardware constraint as an input parameter.

In the context of the invention, a multi-phase inverter, also known as a multi-leg inverter, may be considered as an electronic device that converts DC (direct current) power into AC (alternating current) power in a multi-phase electrical system. The multi-phase inverter may comprise multiple, in particular three legs, wherein the legs are responsible for generating one phase of the AC output waveform. The multi-phase inverter may be configured to be used at least in a motor drive, in particular of an electric vehicle, a renewable energy system, or a power conversion device.

The multi-phase inverter may comprise a set of power switching devices, such as insulated-gate bipolar transistors (IGBTs) or metal-oxide-semiconductor field-effect transistors (MOSFETs), which are controlled by a modulation technique, such as pulse width modulation (PWM). The switching devices are arranged in a bridge configuration, allowing the conversion of DC power to a multi-phase AC output.

In operation, the multi-phase inverter receives a DC power input and, through the controlled switching of the power devices, produces a multi-phase AC output with adjustable voltage magnitude, frequency, and waveform shape. The control of the switching devices is achieved by employing the modulation strategy to generate the desired AC output waveform. Determining at least one hardware limitation may comprise at least one of a measurement of a hardware limitation, obtaining data from a database, in particular over the internet, or a user input.

In the context of the calculating may be considered as a process of determining an output value based on at least one input value. The calculation may include an algorithm.

A hold angle may be an angle of at least one phase of the inverter or a range of angles of at least one phase of the inverter, for which a duty cycle of the inverter is kept at a constant level.

A clamp angle may be an angle of at least one phase of the inverter or a range of angles of at least one phase of the inverter, for which the AC output voltage is clamped to one half of the DC input voltage, in particular by the calculation unit. This one half of the DC input voltage may correspond to the maximum achievable AC output voltage.

Calculating the hold angle and/or the clamp angle is specific for the at least one hardware limitation of the inverter. In other words, the hardware limitation that is used for the calculation at least partially determines the value or values for the hold angle and/or the clamp angle.

In addition or instead of calculating the hold angle and/or the clamp angle, at least a clamping duty cycle or modulation index may be calculated.

Further, it can be provided to adjust, in particular scale, the duty cycle. The adjustment and/or scaling leads to a better voltage accuracy and a lower harmonic distortion.

In summary, the method for overmodulating a multi-phase inverter provides a way to obtain an accurate output voltage, in particular at high modulation index values. The determination of the at least one hardware limitation of the multi-phase inverter provides information that can be used in the calculation steps. Calculating the hold angle and the clamp angle allows defining a scheme for the overmodulation, which can be immediately used for driving the inverter accordingly. As the hold angle and/or the clamp angle are specific for the at least one hardware limitation of the inverter, the knowledge of the limitations of the components of the inverter can be used in order to obtain an optimized overmodulation in terms of accuracy. Furthermore, a method according to the invention may advantageously provide that the constant level is the maximum duty cycle of the inverter. The maximum duty cycle may be a result of a hardware limitation of the switches used and/or of the control of the switches. When the maximum duty cycle of the inverter is used for the constant level, the maximum of energy providable by the inverter may be obtained.

Within the scope of the invention, it is further conceivable that the hardware limitation is at least one of the maximum duty cycle of the multi-phase inverter, a modulation index of the inverter, a setpoint for the modulation index of the inverter, or a dead time of the inverter.

The maximum duty cycle refers to the highest allowable value for the duty cycle of the pulse width modulation (PWM) signals used to control the switching in the inverter. The duty cycle represents the ratio of an ON-time (time during which the power device is conducting) to the total period of the PWM signal. It may be expressed as a percentage. The maximum duty cycle value can be determined by various factors, including the design of the inverter, the specifications of the switches (such as IGBTs or MOSFETs), and the desired operating parameters. It is typically set to ensure safe and reliable operation of the power devices and to avoid exceeding their maximum ratings.

The modulation index of an inverter, also known as the modulation depth or modulation ratio, may be a parameter that quantifies the level of modulation applied to the pulse width modulation (PWM) signals used to control the switching of the switches in the inverter. The modulation index may be defined as the ratio between the peak amplitude of the modulating signal and the peak amplitude of the carrier signal in the PWM scheme. It may represent the extent to which the carrier signal is modulated to generate the desired output waveform. The modulation index may determine the relationship between the amplitude of the AC output voltage and the reference voltage or command signal. Thus, adjusting the modulation index may control the output voltage magnitude. Further, a modulation index of 1 may indicate a full modulation, where the amplitude of the carrier signal is modulated between zero and the peak value of the reference signal. Lower modulation indices result in reduced output voltage magnitudes, while higher modulation indices lead to larger output voltage magnitudes. The setpoint for the modulation index of the inverter may be regarded as a value that is set by a user and/or determined by the application.

In the context of the invention, the dead time of the inverter may refer to a time period during which both the upper and lower switches (also known as power devices) of one of the legs are intentionally turned off. This dead time may be introduced to prevent cross-conduction or shoot-through current between the switches.

When switching the power devices in an inverter, there is a brief transition period where both switches are turned off simultaneously. If there is no dead time, this transition can create a momentary short circuit across the DC bus.

By introducing a dead time, a time gap is inserted between turning off one switch and turning on the other switch. This ensures that both switches are not conducting simultaneously, effectively avoiding the cross-conduction condition. The dead time allows for the proper commutation of the power devices and reduces the likelihood of short circuits or excessive currents during the switching process.

The duration of the dead time may be in the order of microseconds. The dead time may be determined by at least one of the characteristics of the power devices, the switching speed, and the voltage or current requirements of the application.

It is further conceivable in a method according to the invention that calculating the hold angle and/or the clamp angle is provided by a search algorithm, in particular wherein the search algorithm considers at least a voltage accuracy, a total harmonic distortion or a phase accuracy.

A search algorithm is a computational method or procedure used to systematically explore a problem space in order to find an optimal solution or make informed decisions. It is a systematic approach to solving problems by iteratively examining different possibilities or configurations.

In other words, a search algorithm can be employed in a method according to the invention that is configured to explore and evaluate various overmodulation strategies, in particular different combinations of hold and/or clamp angles to find the optimal scheme that meets specific criteria or objectives (in particular a voltage accuracy, a total harmonic distortion or a phase accuracy). A search algorithm provides that advantage that it can explore a large solution space in a relatively short amount it time. By defining specific optimization objectives, such as maximizing output voltage magnitude, minimizing harmonic distortion, or improving energy efficiency, a search algorithm can evaluate different schemes and guide the search towards finding the scheme that best satisfies these objectives. Also, constraints and trade-offs may be considered. Inverter systems all have specific constraints, such as limitations on available resources, component specifications, or operating conditions. A search algorithm can take these constraints into account and help identify the scheme that optimizes performance while adhering to the given constraints. It can also help in exploring trade-offs between different performance metrics and finding a balanced solution.

Furthermore, in a method according to the invention, it is conceivable to switch at least three half bridges of the inverter for converting the DC input voltage to the AC output voltage, wherein the at least three half bridges are switched according to the calculated hold angle and/or clamp angle. In other words, the actual switching of the switches in the half bridges may be part of the method.

Furthermore, it is conceivable in a method according to the invention, that the search strategy is configured to solve a constraint satisfaction problem, wherein in particular the constraint to be satisfied is at least one of voltage accuracy, a total harmonic distortion or a phase accuracy.

A constraint satisfaction problem (CSP) may be regarded as a computational problem that involves finding a solution that satisfies a set of constraints and/or conditions. In a CSP, the problem is defined by a set of variables, each with a domain of possible values, and a set of constraints that restrict the combinations of values that the variables can take.

In the context of a search strategy for an optimized overmodulation scheme in an inverter, using a CSP formulation offers the advantage of leveraging the defined constraints to efficiently prune the search space, handle the complex relationships, and support incremental refinement. These advantages enhance the search for an optimized overmodulation scheme, enabling the identification of hold and clamp angles that result at least in a high voltage accuracy, a low total harmonic distortion or a high phase accuracy.

Within the scope of the invention, it is further conceivable that an output is generated, which includes at least one of the hold angle, the clamp angle, a voltage gain factor, or a scaling duty cycle. In other words, the hold angle, the clamp angle, a voltage gain factor, or a scaling duty cycle may be provided as data or a data set, which can be in particular provided via an interface. This provides the advantage that the overmodulation scheme can be considered by other components, in particular the load driven by the inverter.

According to another aspect of the invention, a computer program product comprising instructions which, when the program is executed by a computer, cause the computer to carry out a method according to the invention.

Thus, a computer program product according to the invention provides the same advantages as have already been described in detail with reference to a method according to the invention.

In accordance with another aspect of the invention, a multi-phase inverter is provided, configured to perform an inventive method.

Thus, a multi-phase inverter according to the invention brings the same advantages as have already been described in detail with reference to a method according to the invention and/or a computer program product according to the invention.

Further advantages, features and details of the invention will be apparent from the following description, in which embodiments of the invention are described in detail with reference to the drawings. In this connection, the features mentioned in the claims and in the description may each be essential to the invention individually or in any combination.
- Fig. 1:: shows a schematic overview of a method according to the invention, and
- Fig. 2:: shows a schematic representation of an overmodulation scheme as a result of the method according to the invention.

In the following description of some embodiments of the invention, the identical reference signs are used for the same technical features even in different embodiments.

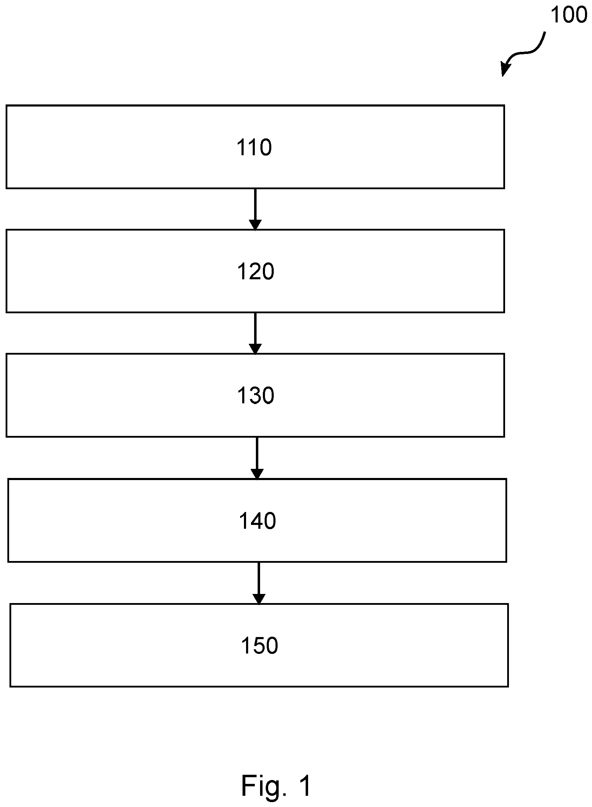

Figure 1 shows a method 100 for overmodulating a multi-phase inverter that is configured to convert a DC input voltage to an AC output voltage, comprising:
- determining 110 at least one hardware limitation of the multi-phase inverter,
- calculating 120 a hold angle 210, for which a duty cycle 230 of the inverter is kept at a constant level,
- calculating 130 a clamp angle 220, for which the AC output voltage is clamped to one half of the DC input voltage,
wherein calculating 120, 130 the hold angle 210 and/or the clamp angle 220 is specific for the at least one hardware limitation of the inverter.

In summary, the method 100 for overmodulating a multi-phase inverter provides a way to obtain an accurate output voltage, in particular at high modulation index values. The determination of the at least one hardware limitation of the multi-phase inverter provides information that can be used in the calculation steps. Calculating 110, 120 the hold angle 210 and the clamp angle 220 allows defining a scheme for the overmodulation, which can be immediately used for driving the inverter accordingly. As the hold angle 210 and/or the clamp angle 220 are specific for the at least one hardware limitation of the inverter, the knowledge of the limitations of the components of the inverter can be used in order to obtain an optimized overmodulation in terms of accuracy.

As further shown in Figure 1, it is conceivable that a method 100 can comprise a switching 140 at least three half bridges of the inverter for converting the DC input voltage to the AC output voltage, wherein the at least three half bridges are switched according to the calculated 120, 130 hold angle 210 and/or clamp angle 220. In other words, the actual switching of the switches in the half bridges may be part of the method 100.

Further, it may be provided in a method according to the invention that an output is generated 150, which includes at least one of the hold angle 210, the clamp angle 220, a voltage gain factor, or a scaling duty cycle. In other words, the hold angle 210, the clamp angle 220, a voltage gain factor, or a scaling duty cycle may be provided as data or a data set, which can be in particular provided via an interface. This provides the advantage that the overmodulation scheme can be considered by other components, in particular the load driven by the inverter.

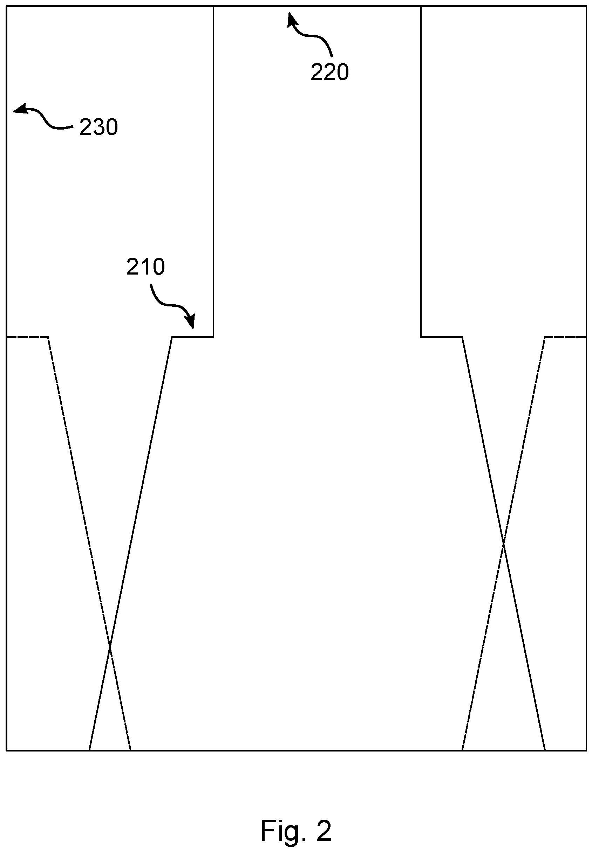

Figure 2 shows an example of a possible duty cycle (on the y-axis) of one phase as a function of the phase angle (on the x-axis) within the overmodulation scheme obtained by a method according to the invention. The dashed line represents a second phase.

As can be seen, the duty cycle is constant for the hold angle 210 and clamped to the maximum duty cycle for the determined clamp angle 220.

The foregoing explanation of the embodiments describes the present invention exclusively in the context of examples. Of course, individual features of the embodiments may be freely combined with one another, provided that this is technically expedient, without departing from the scope of the present invention.

### Reference signs

- 100: method
- 110: determining
- 120: calculating a hold angle
- 130: calculating a clamp angle
- 140: switching
- 150: generating

- 210: hold angle
- 220: clamp angle
- 230: duty cycle

## Claims

1. Method (100) for overmodulating a multi-phase inverter that is configured to convert a DC input voltage to an AC output voltage, comprising:
- determining (110) at least one hardware limitation of the multi-phase inverter,
- calculating (120) a hold angle (210), for which a duty cycle (230) of the inverter is kept at a constant level,
- calculating (130) a clamp angle (220), for which the AC output voltage is clamped to one half of the DC input voltage,
wherein calculating (120, 130) the hold angle (210) and/or the clamp angle (220) is specific for the at least one hardware limitation of the inverter.

2. Method (100) according to claim 1,
**characterized in that**
the constant level is the maximum duty cycle of the inverter.

3. Method (100) according to claims 1 and 2,
**characterized in that**
the hardware limitation is at least one of the maximum duty cycles of the multi-phase inverter, a modulation index of the inverter, a setpoint for the modulation index of the inverter, or a dead time of the inverter.

4. Method (100) according to one of the previous claims,
**characterized in that**
calculating (120, 130) the hold angle (210) and/or the clamp angle (220) is provided by a search algorithm, in particular wherein the search algorithm considers at least a voltage accuracy, a total harmonic distortion or a phase accuracy.

5. Method (100) according to one of the previous claims,
**characterized in that**
switching (140) at least three half bridges of the inverter for converting the DC input voltage to the AC output voltage, wherein the at least three half bridges are switched according to the calculated (120, 130) hold angle (210) and/or clamp angle (220), is further comprised.

6. Method (100) according to one of the previous claims,
**characterized in that**
the search strategy is configured to solve a constraint satisfaction problem, wherein in particular the constraint to be satisfied is at least one of voltage accuracy, a total harmonic distortion or a phase accuracy.

7. Method (100) according to one of the previous claims,
**characterized in that**
an output is generated (150), which includes at least one of the hold angle (210), the clamp angle (220), a voltage gain factor, or a scaling duty cycle.

8. Computer program product comprising instructions which, when the program is executed by a computer, cause the computer to carry out a method (100) according to one of the previous claims.

9. Multi-phase inverter, configured to perform a method according to one of claims 1 to 7.
